# EUROPEAN PATENT APPLICATION

(11) **EP 4 678 550 A1**
(43) Date of publication of application: **14.01.2026**
(21) Application number: 24766399.0
(22) Date of filing: 04.03.2024
(51) Int. Cl.: B65D 6/16

(54) **FOLDABLE CONTAINER AND MANUFACTURING METHOD THEREFOR**

(30) Priority: 08.03.2023 CN 202310226372
(71) Applicant: Horen Cortp Co., Ltd., Shanghai 200233 (CN)
(72) Inventor: JIAN, Yuanli, Shangai 200233 (CN)
(74) Representative: Viering, Jentschura & Partner mbB Patent- und Rechtsanwälte
(86) International application number: PCT/CN2024/079853
(87) International publication number: WO 2024/183684

(57) **Abstract**

A foldable container and a manufacturing method therefor. The foldable container comprises a base (1) and a plurality of side plates (2). The plurality of side plates (2) are foldably mounted on the base (1), and the side plates (2) and the base (1) form an accommodating cavity. The foldable container further comprises at least one side discharge port (3) and a gate plate (4). The base (1) is provided with a first notch (13), the side plate (2) facing to the first notch (13) is provided with a second notch (23), and the first notch (13) and the second notch (23) jointly form the side discharge port (3). The gate plate (4) is slidably mounted on said side plate (2), and the movement of the gate plate (4) on the side plate (2) allows the gate plate (4) to have a first state in which the side discharge port (3) is closed, and a second state in which the side discharge port (3) is open. The side discharge port of the foldable container is obtained by directly processing a base and side plates of an existing container, which has the advantage of low costs.

## Description

This patent application claims the priority of the following Chinese patent application: Filed date: March 8, 2023; Application number: 202310226372.5; Title of Invention: A foldable container and a manufacturing method therefor.

The above-referenced application is incorporated herein by reference in its entirety.

### Technical Field

The invention relates to the technical field of circulating containers, and in particular to a foldable container and a manufacturing method therefor.

### Background Technology

Unlike traditional wooden or iron boxes, two pairs of side plates of foldable pallet boxes is foldable inwardly relative to the base, which can reduce the space occupied when empty boxes are stored, therefore, foldable pallet boxes have the cost advantage of return transportation of empty boxes and are very popular in packaging applications in many industries. In terms of cargo loading and unloading, the methods used for integrated pallet boxes and foldable pallet boxes are roughly the same, almost all of which are manual or robotic pick-and-place. However, in some special cases, such as loading bottle preforms and bottle caps, the container is fixed by a turning table and then is rotated and dumped.

However, many manufacturers have a low acceptance to the turning table. The main reasons are that the turning table is expensive, and the overall safety is prone to hidden dangers: the box that turns about 135 degrees needs to have sufficient strength, and it is also necessary to consider preventing foreign objects attached to the box from entering the feeding port with the goods. In order to solve this problem, the existing technology adopts the following two solutions: one is to provide a discharge port at the center of the base, provide a funnel plate inside the box and provide a gate plate between the discharge port and the funnel plate, when unloading, the discharge port is aligned with a feeding port, and then the gate plate is opened for feeding; the other is to provide a discharge port at the lower end of a side plate and provide a gate plate on the side plate accordingly, the gate plate may be opened by displacement or rotation relative to the side plate, when unloading, the discharge port is aligned with a feeding port, and then the gate plate is opened and the pallet box is slightly tilted at an angle.

In actual use, the funnel-type foldable pallet box has a considerable height of the funnel plate, which means that the funnel plate should be taken out from the container before the container can be folded when the empty box returns, and the funnel plate also needs additional stacking and packaging for transportation, which is criticized by customers. The side discharge typed pallet box does not have the above problems, but it is well known that the injection mold costs of spare parts for medium and large-sized containers are high, and the market demand for single bottle preforms and bottle caps is limited, and there are very few manufacturers willing to invest in development. Therefore, it is necessary to provide a low-cost foldable pallet box with a side discharge port.

### Summary of the invention

The object of the present invention is to provide a foldable container, which forms a side discharge port on a side plate and a base, and which can be realized by modifying the existing foldable container, thus having the advantage of low cost.

To achieve the above object, the technical solution adopted by the present invention is as follows:
A foldable container comprises a base and a plurality of side plates, wherein the plurality of side plates are foldably mounted on the base, and the side plates and the base form a cavity, and the foldable container further comprises:
at least one side discharge port, wherein the base is provided with a first notch, the side plate facing to the first notch is provided with a second notch, the first notch and the second notch jointly form the side discharge port;
a gate plate, which is slidably mounted on the side plate, and the movement of the gate plate on the side plate allows the gate plate to have a first state in which the side discharge port is closed and a second state in which the side discharge port is open.

In one embodiment, the foldable container also comprises a back plate, which is fixed to an inner side of the side plate, and the back plate is provided with a third notch matching to the second notch, and a sliding groove is provided on a side of the back plate facing the side plate, and the gate plate is slidably located in the sliding groove.

In one embodiment, a first positioning protrusion and a second positioning protrusion are provided in the sliding groove, and the gate plate is provided with positioning holes matching to the first positioning protrusion and the second positioning protrusion respectively, and the positions of the first positioning protrusion and the second positioning protrusion in the sliding groove correspond to the first state and the second state of the gate plate respectively.

In one embodiment, the gate plate is further provided with guiding grooves corresponding to the first positioning protrusion and the second positioning protrusion, and when the gate plate moves, the first positioning protrusion and the second positioning protrusion slide in the guiding grooves respectively.

In one embodiment, the thickness of the back plate does not exceed 9 mm.

In one embodiment, the gate plate is provided with a handling portion.

In one embodiment, the base and the side plates are all vacuum forming parts.

In one embodiment, a bottom surface of the first notch is not higher than a bearing surface of the base.

In one embodiment, the bottom surface of the first notch is covered with a first baffle plate.

In one embodiment, an inner side wall of the second notch is covered with a second baffle plate.

The present invention also provides a manufacturing method for a foldable container, comprising the following steps:
providing a container, the container comprises a base and four side plates in two pairs arranged opposite to each other for each pair, the four side plates are foldably mounted on the base, and the side plates and the base form a cavity;
machining a first notch and a second notch directly opposite to the first notch on the base and the side plate respectively, and the first notch and the second notch jointly form a side discharge port;
further providing a gate plate and a back plate, wherein the back plate has a third notch matching to the second notch, the back plate is fixed to the inner side surface of the side plate having the second notch, the back plate and the side plate form a sliding groove for accommodating the gate plate, the gate plate is slidably placed in the sliding groove, and the movement of the gate plate in the sliding groove allows the gate plate to have a first state in which the side discharge port is closed and a second state in which the side discharge port is open.

In one embodiment, the manufacturing step further comprises:
after machining the first notch and the second notch in the base and the side plate respectively, covering the bottom surface of the first notch and the inner side wall of the second notch with a first baffle plate and a second baffle plate respectively.

The present invention adopts the above technical solution, which has the beneficial effect that the side discharge port on the foldable container provided by the present invention is jointly composed of the first notch and the second notch provided on the base and the side plate and the gate plate, therefore, the foldable container can be provided with a side discharge port by directly modifying the base and the side plates of the existing foldable container, the added parts are all profiles, plates or vacuum forming parts, and the investment cost is extremely low, but it has sufficient reliability and easy operation.

### Brief description of the drawings

FIG.1 is a schematic diagram showing a state in which a side discharge port being closesd by a gate plate of the foldable container.
FIG.2 is a schematic diagram showing a state in which the side discharge port is opened by the gate plate of the foldable container.
FIG.3 is a schematic diagram showing the foldable container after removing the side plate without the side discharge port.
FIG.4 is a schematic diagram showing the side plate of the foldable container without the side discharge port.
FIG.5 is a schematic diagram showing a base of the foldable container.
FIG.6 is a schematic diagram showing a side plate of the foldable container having a side discharge port.
FIG.7 is a schematic diagram showing a back plate.
FIG.8 is a schematic diagram showing a gate plate.
FIG. 9 is a partial cross-sectional schematic diagram showing the side discharge port.
FIG. 10 is a schematic diagram showing a gate plate with a handling portion.
FIG. 11 is a schematic diagram showing that the first notch of the base is covered with a first baffle.
FIG. 12 is a schematic diagram showing that the second notch of the side plate is covered with a second baffle.

### Detailed description of embodiments

The preferred embodiments of the present invention will be described in detail below in conjunction with the accompanying drawings, so that the purpose, features and advantages of the present invention can be more clearly understood. It should be understood that the embodiments shown in the accompanying drawings are not intended to limit the scope of the present invention, but are only intended to illustrate the essential spirit of the technical solution of the present invention.

In the following description, certain specific details are set forth for the purpose of illustrating various disclosed embodiments to provide a thorough understanding of the various disclosed embodiments. However, those skilled in the relevant art will recognize that the embodiments may be practiced without one or more of these specific details. In other cases, well-known devices, structures, and techniques associated with the present application may not be shown or described in detail to avoid unnecessarily obscuring the description of the embodiments.

Unless the context requires otherwise, throughout the specification and claims, the word "comprise" and variations such as "include" and "have" should be construed in an open, inclusive sense, ie, should be interpreted as "including, but not limited to."

References throughout the specification to "one embodiment" or "an embodiment" indicate that a particular feature, structure, or characteristic described in connection with the embodiment is included in at least one embodiment. Thus, the appearances of "in one embodiment" or "in an embodiment" in various places throughout the specification are not necessarily all referring to the same embodiment. Furthermore, the particular features, structures, or characteristics may be combined in any manner in one or more embodiments.

As used in this specification and the appended claims, the singular forms "a," "an," and "the" include plural referents unless the context clearly dictates otherwise. It should be noted that the term "or" is generally employed in its sense including "and/or" unless the context clearly dictates otherwise.

In the following description, in order to clearly show the structure and working mode of the present invention, many directional words will be used for description, but the words "front", "back", "left", "right", "outside", "inside", "outward", "inward", "up", "down", etc. should be understood as convenient terms and should not be understood as restrictive terms.

In addition, the terms "horizontal", "vertical", "overhanging" and the like do not mean that the components are required to be absolutely horizontal or overhanging, but can be slightly tilted. For example, "horizontal" only means that its direction is more horizontal than "vertical", and does not mean that the structure must be completely horizontal, but can be slightly tilted.

In the description of this application, it should also be noted that, unless otherwise clearly specified and limited, the terms "set", "install", "connect", and "connect" should be understood in a broad sense, for example, it can be a fixed connection, a detachable connection, or an integral connection; it can be a mechanical connection or an electrical connection; it can be a direct connection, or it can be indirectly connected through an intermediate medium, or it can be the internal communication of two elements. For ordinary technicians in this field, the specific meanings of the above terms in this application can be understood according to specific circumstances.

### Embodiment 1

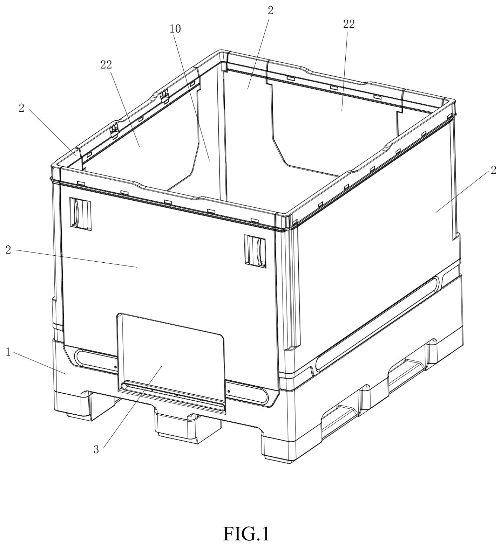

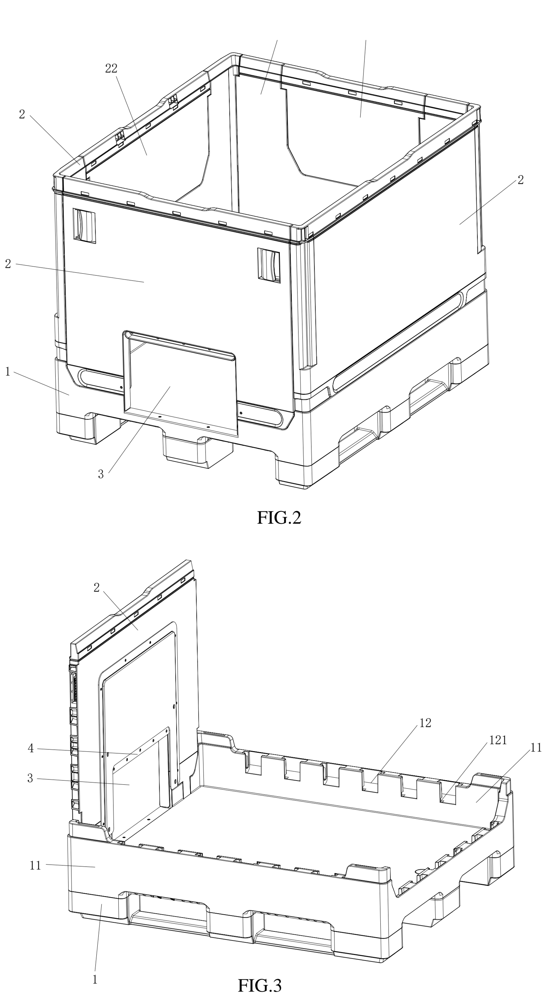

This embodiment provides a foldable container, as shown in FIG. 1 to FIG. 4 , the foldable container comprises a base 1 and four side plates 2 in two pairs arranged opposite to each other for each pair. The four side plates 2 and the base 1 jointly form a rectangular cavity 10.The side plates 2 and the base 1 are vacuum forming parts made by the vacuum forming process. The base 1 is provided with a plurality of guarding edges 11 extending in a depth direction of the cavity 10. Each guarding edge 11 is arranged corresponding to a side plate 2, and each guarding edge 11 is provided with a number of hanging grooves 12. The bottom of each side plate 2 is also provided with a hanging hook 21 corresponding to the hanging groove 12. Through the cooperation of the corresponding hanging groove 12 with the hanging hook 21 at the bottom of itself, each side plate 2 limits the upward separation of each side plate part from the base when the container is unfolded for use, and also limits the displacement or deformation of each side plate to the outside. In addition, the hanging hook 21 is provided with a rotating shaft 211, and the hanging groove 12 is provided with a pivoting groove 121 matching to the rotating shaft 211. The rotating shaft 211 of the hanging hook 21 is located in the pivoting groove 121 of the corresponding hanging groove 12, so that each side plate 2 is foldable relative to the base 1. The folded side plate 2 can be attached to the base 1 or taken out separately. The side plate 2 may also be provided with a door 22 that can be opened and closed relative to the side plate.

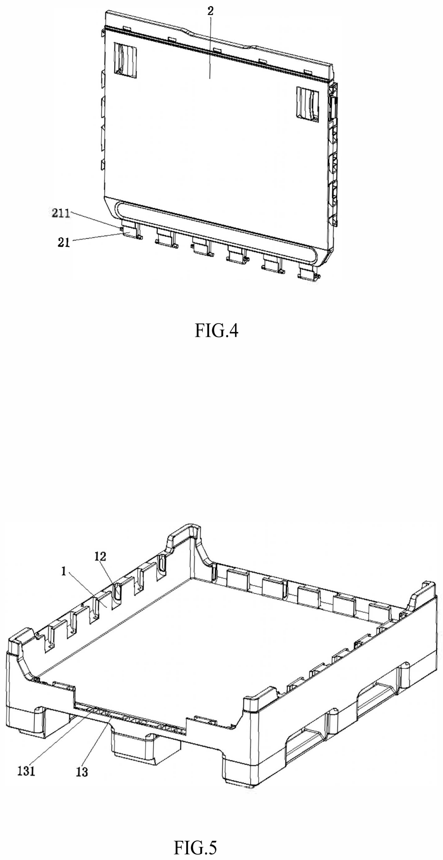

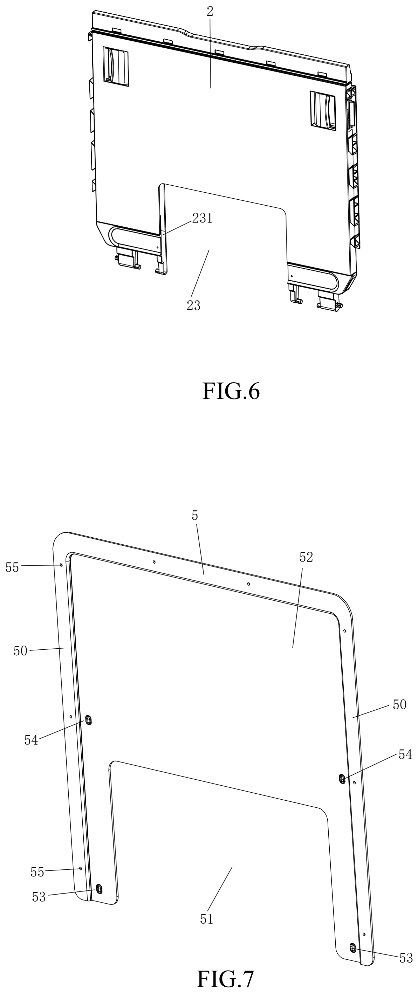

Referring to FIGS.5 and 6, the foldable container further comprises at least one side discharge port 3 and a gate plate 4, wherein the base 1 is provided with a first notch 13, and the bottom surface of the first notch 13 is not higher than the bearing surface of the base 1, so that there is no obstruction between the first notch 13 and the bearing surface of the base 1, thus facilitating the unloading operation of the goods from the side discharge port 3. The side plate 2 facing to the first notch 13 is provided with a second notch 23. The first notch 13 and the second notch 23 jointly form the side discharge port 3. It should be noted that, although the drawings of this embodiment take only one side discharge port as an example, the number of side discharge ports may be determined according to actual needs, for example, two side discharge ports can be provided on the two side plates and the base, and of course, three or more side discharge ports may also be provided.

The gate plate 4 is slidably mounted on the side plate 2, and the movement of the gate plate 4 on the side plate 2 allows the gate plate 4 to have a first state in which the side discharge port 3 is closed and a second state in which the side discharge port 3 is open. When the gate plate 4 closes the side discharge port 3, the foldable container is in a conventional storage state. When the goods stored in the foldable container need to be unloaded, the discharge port is aligned with a feeding port during unloading, and then the gate plate is opened and the pallet box is slightly tilted at an angle to allow the goods in the container to be discharged from the side discharge port into the feeding port by its own gravity or with the assistance of external force. Since the side discharge port 3 provided in this embodiment is jointly formed by the first notch 13 and the second notch 23 provided by the base 1 and the side plate 2 and the gate plate 4 respectively, the foldable pallet box can have the side discharge port by directly modifying the existing foldable container. The added parts are all profiles, plates or vacuum forming parts, the investment cost is extremely low, but it still has sufficient reliability and ease of operation.

In this embodiment, the gate plate opens or closes the side discharge port 3 by linear displacement. Specifically, referring to FIGS. 7 to 9, the foldable container further comprises a back plate 5, which is provided with a plurality of fixing holes 55,.The back plate 5 is fixed to the inner side surface of the side plate 2 by rivets received in the fixing holes 55. The back plate 5 is also provided with a third notch 51 matching to the second notch 23, and the shape of the third notch 51 is substantially the same as that of the second notch 23, so that the third notch 51 on the back plate 5 can be arranged directly opposite to the second notch 23 on the side plate 2. The sides of the third notch 51 are aligned with the sides of the second notch 23, so as to facilitate position reference during assembly.

A side surface of the back plate 5 facing the side plate 2 is provided with a sliding groove 52, which extends in the depth direction of the cavity 10, the gate plate 4 is slidably located in the sliding groove 52, and is able to slide in the sliding groove 52 in the depth direction of the cavity 10 to open or close the side discharge port. Wherein, the back plate 5 is provided with a convex portion 50 that can accommodate and allow the gate plate 4 to move. The width between inner sides of the convex portion 50 is slightly larger than the width of the gate plate 4, for example, about 2 mm,.The height of the convex portion 50 is slightly larger than the thickness of the gate plate 4, so that with the convex portion 50 of the back plate 5 being attached to the inner side of the side plate 2, a gap space between the back plate 5 and the side plate 2 forms the sliding groove 52 for accommodating the gate plate 4.

Preferably, a first positioning protrusion 53 and a second positioning protrusion 54 are provided in the sliding groove 52. The gate plate 4 is provided with positioning holes 41 matching to the first positioning protrusion 53 and the second positioning protrusion 54. The positions of the first positioning protrusion 53 and the second positioning protrusion 54 in the sliding groove 52 respectively correspond to the first state and the second state of the gate plate 4, so that the gate plate 4 can be kept in a fully closed or fully open position and will not be easily moved by non-intended external forces such as bumps and vibrations.

More preferably, the gate plate 4 is also provided with guiding grooves 42 corresponding to the first positioning protrusion 53 and the second positioning protrusion 54. When the gate plate 4 moves, the first positioning protrusion 53 and the second positioning protrusion 54 slide in the guiding grooves 42 respectively to reduce the friction resistance of the positioning protrusion to the gate plate 4 when the gate plate 4 moves up and down, so as to facilitate the movement of the gate plate 4.

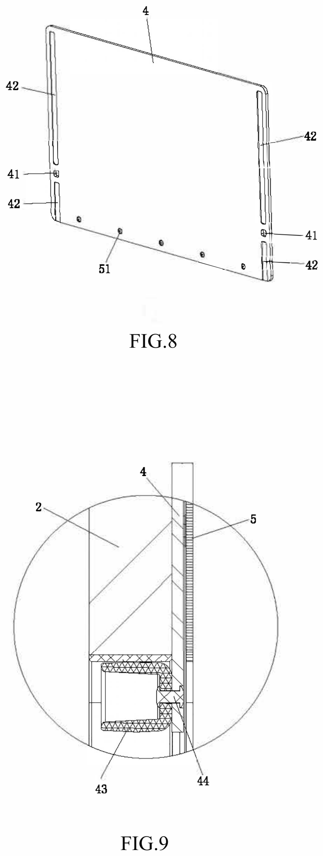

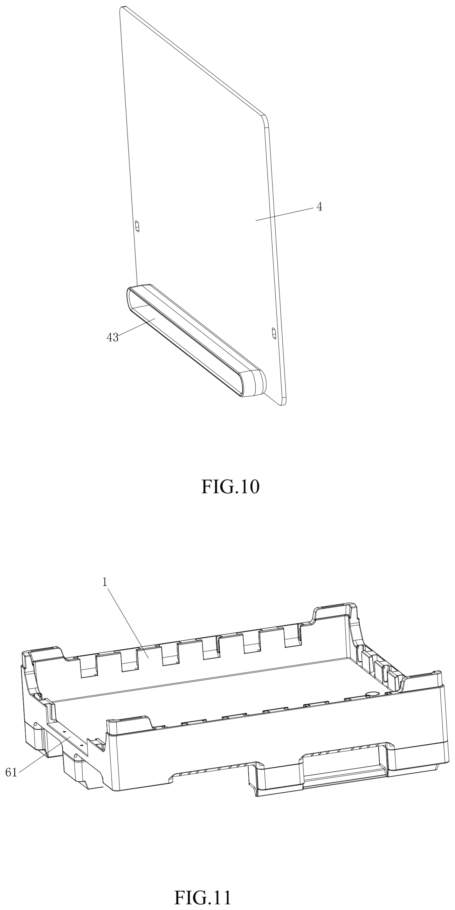

In addition, referring to FIGS. 9 and 10, the gate plate 4 may also be provided with a handling portion 43, which may be convenient for holding to facilitate displacement operation of the gate plate 4. The handling portion may be riveted to the gate plate 4 by rivets 44, and the gate plate 4 may be opened and closed more easily by the handling portion 43.

In this embodiment, the thickness of the back plate 5 is controlled not to exceed 9 mm, since there is always a folding gap between adjacent side plates during folding to cope with possible warping or product manufacturing tolerances of the side plates, thus the increased thickness of the back plate 5 does not affect the folding process and folding height of the box.

In addition, referring to FIGS. 5 and 6, since the base 1 and the side plate 2 in this embodiment are both vacuum forming parts, the base 1 and the side plate 2 can be milled to form the first notch 13 and the second notch 23, but at the same time, a first hollow portion 131 will be formed on the bottom surface of the base 1 corresponding to the first notch 13, and a second hollow portion 231 will be formed on the side wall of the side plate 2 corresponding to the second notch 23. The existence of these hollow portions will allow some debris such as gravel, dust, liquid and the like to enter the base 1 and the side plate 2, and it is not convenient to clean the base 1 and the side plate 2. Therefore, the bottom surface of the first notch 13 is covered with a first baffle plate 61, and the inner side wall of the second notch 23 is covered with a second baffle plate 62. The first baffle plate 61 and the second baffle plate 62 cover the corresponding first hollow portion 131 and the second hollow portion 231, thereby preventing foreign objects from entering into the base 1 and the side plate 2 from the first notch 13 and the second notch 23. The first baffle plate 61 and the second baffle plate 62 may be fixed to the corresponding base or side plate by riveting, bonding, or ultrasonic welding.

### Embodiment 2

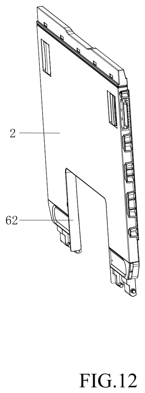

This embodiment provides a manufacturing method for a foldable container, the manufacturing method may be used to manufacture the foldable container provided in Embodiment 1, referring to FIGS.1-12, the manufacturing method specifically includes the following steps:
providing a container, the container comprises a base 1 and four side plates 2 in to pairs arranged opposite to each other for each pair, the four side plates 2 and the base 1 jointly form a rectangular cavity 10, and the side plates 2 and the base 1 are vacuum forming parts made by vacuum forming process;
machining a first notch 13 on the base through a CNC or other machining process, and machining a second notch 23 directly opposite to the first notch 13 at the bottom of the side plate 2 corresponding to the first notch 13 through a CNC or other machining process, and the first notch 13 and the second notch 23 jointly form a side discharge port 3;
further providing a gate plate 4 and a back plate 5, wherein the back plate 5 has a third notch 51 matching to the second notch, the back plate 5 is fixed to the inner side surface of the side plate 2 having the second notch 23, and the third notch 51 and the second notch 23 are aligned, and the back plate 5 and the side plate 2 form a sliding groove 52 for accommodating the gate plate 4, and the gate plate 4 is slidably placed in the sliding groove 52.

The manufacturing method of the foldable container provided by the present invention directly machines the side discharge port on the base and side plates of the existing foldable container, with simple manufacturing steps, and no need to develop new injection molds, and no impact on the folding of the original pallet box; the modified foldable pallet box with side discharge port is easy to use and operate, and has reliable performance.

Preferably, after machining the first notch 13 and the second notch 23 on the base 1 and the side plate 2 respectively, covering the first notch 13 and the second notch 23 with the first baffle 61 and the second baffle 62 respectively, to cover the hollow parts on the first notch 13 and the second notch 23 to prevent foreign objects from entering into the base 1 and the side plate 2.

The preferred embodiments of the present invention have been described in detail above, but it should be understood that after reading the above teachings of the present invention, those skilled in the art may make various changes or modifications to the present invention. These equivalent forms also fall within the scope defined by the appended claims of this application.

## Claims

1. A foldable container, comprising a base and a plurality of side plates, wherein the plurality of side plates are foldably mounted on the base, and the side plates and the base form a cavity, wherein the foldable container further comprises:
at least one side discharge port, wherin the base is provided with a first notch, the side plate facing to the first notch is provided with a second notch, the first notch and the second notch jointly form the side discharge port;
a gate plate, which is slidably mounted on the side plate, and the movement of the gate plate on the side plate allows the gate plate to have a first state in which the side discharge port is closed and a second state in which the side discharge port is open.

2. The foldable container according to claim 1, wherein the foldable container further comprises a back plate, which is fixed to an inner side of the side plate, and the back plate is provided with a third notch matching to the second notch, and a sliding groove is provided on a side of the back plate facing the side plate, and the gate plate is slidably located in the sliding groove.

3. The foldable container according to claim 2, wherein a first positioning protrusion and a second positioning protrusion are provided in the sliding groove, and the gate plate is provided with positioning holes matching to the first positioning protrusion and the second positioning protrusion respectively, and positions of the first positioning protrusion and the second positioning protrusion in the sliding groove correspond to the first state and the second state of the gate plate respectively.

4. The foldable container according to claim 3, wherein the gate plate is further provided with guiding grooves corresponding to the first positioning protrusion and the second positioning protrusion, and when the gate plate moves, the first positioning protrusion and the second positioning protrusion slide in the guiding grooves respectively.

5. The foldable container according to claim 2, wherein a thickness of the back plate does not exceed 9 mm.

6. The foldable container according to claim 1, wherein the gate plate is provided with a handling portion.

7. The foldable container according to claim 1, wherein the base and the side plates are all vacuum forming parts.

8. The foldable container according to claim 7, wherein a bottom surface of the first notch is not higher than a bearing surface of the base.

9. The foldable container according to claim 8, wherein the bottom surface of the first notch is covered with a first baffle plate.

10. The foldable container according to claim 7, wherein an inner side wall of the second notch is covered with a second baffle plate.

11. A manufacturing method for a foldable container, wherein the manufacturing method comprises following steps:
providing a container, the container comprises a base and four side plates in two pairs arranged opposite to each other for each pair, the four side plates are foldably mounted on the base, and the side plates and the base form a cavity;
machining a first notch and a second notch facing to the first notch on the base and the side plate respectively, and the first notch and the second notch jointly form a side discharge port;
further providing a gate plate and a back plate, wherein the back plate has a third notch matching to the second notch, the back plate is fixed to the inner side surface of the side plate having the second notch, the back plate and the side plate form a sliding groove for accommodating the gate plate, the gate plate is slidably placed in the sliding groove, and the movement of the gate plate in the sliding groove allows the gate plate to have a first state in which the side discharge port is closed and a second state in which the side discharge port is open.

12. The manufacturing method according to claim 11, wherein the manufacturing steps further comprises:
after machining the first notch and the second notch in the base and the side plate respectively, covering the bottom surface of the first notch and the inner side wall of the second notch with a first baffle plate and a second baffle plate respectively.
